# EUROPÄISCHE PATENTSCHRIFT

(11) **EP 1 560 877 B1**
(45) Veröffentlichungstag und Bekanntmachung des Hinweises auf die Patenterteilung: **16.12.2009**
(21) Anmeldenummer: 03758019.8
(22) Anmeldetag: 18.10.2003
(51) Int. Cl.: C08K 3/22, B01F 7/00, B01F 7/16

(54) **VERFAHREN ZUR HERSTELLUNG EINES MIT TITANDIOXID PIGMENTIERTEN POLYAMIDS**
METHOD FOR THE PRODUCTION OF A POLYAMIDE PIGMENTED WITH TITANIUM DIOXIDE
PROCEDE DE PRODUCTION D'UN POLYAMIDE PIGMENTE A L'AIDE DE DIOXYDE DE TITANE

(30) Priorität: 24.10.2002 DE 10249797
(43) Veröffentlichungstag der Anmeldung: 10.08.2005
(73) Patentinhaber: BASF SE, 67056 Ludwigshafen (DE)
(72) Erfinder: PLACHETTA, Christoph, 67117 Limburgerhof (DE); HECKMANN, Manfred, 68259 Mannheim (DE); HÜNGER, Hans-Harald, 67158 Ellerstadt (DE); WEISS, Robert, 67281 Kirchheim (DE)
(86) Internationale Anmeldenummer: PCT/EP2003/011574
(87) Internationale Veröffentlichungsnummer: WO 2004/037908

(56) Entgegenhaltungen:
- EP-A- 0 070 452
- WO-A-01/87474
- US-A- 4 710 535
- US-A- 4 879 120

## Beschreibung

Die vorliegende Erfindung betrifft ein Verfahren zur Herstellung eines Titandioxid-Pigmente enthaltenden Polyamids, nach einem solchen Verfahren erhältliche Polyamide und die Verwendung solcher Polyamide als Masterbatch zur Einfärbung oder Mattierung von Polymeren.

Die Verwendung von Titandioxid zur Mattierung oder Einfärbung von Polyamiden ist allgemein bekannt.

Dabei ist es allgemein wünschenswert, dass das Titandioxid in möglichst fein und gleichmäßig dispergierter Form vorliegt und die durch Einfärbung oder Mattierung mit Titandioxid erhaltenen Polyamide bei der weiteren Verarbeitung, beispielsweise beim Verspinnen, eine möglichst geringe Abrasivität, hervorgerufen insbesondere durch die Titandioxid-Pigmente, aufweisen.

Zum Einbringen der Titandioxid-Pigmente in das Polyamid sind verschiedene Techniken bekannt.

So beschreibt Fourné, Synthetische Fasern, Carl Hanser Verlag, München-Wien, 1995, Seite 629-630, Kapitel 6.8 und 6.8.1., die Zugabe von Titandioxid zu Beginn der Polymerisation oder die Zugabe eines Masterbatches, also einem Polyamid mit hohem Titandioxid-Gehalt, zu dem zu polymerisierenden, im wesentlichen Titandioxid-freien Hauptstrom, zum Zweck der Mattierung von Polyamiden.

Aus EP-A-70 452 ist das Einkneten des Titandioxids in Caprolactam mit anschließendem Verkneten mit Wasser, Aufschlämmen der erhaltenen Paste mit Wasser, Sedimentieren der groben Titandioxid-Partikel und Dekantieren von dem sedimentierten Anteil bekannt.

Diese Verfahren zur Herstellung von mit Titandioxid pigmentierten Polymeren sind immer noch nicht befriedigend und eine weitere Verbesserung wünschenswert.

Der vorliegenden Erfindung lag die Aufgabe zugrunde, ein Verfahren bereitzustellen, dass die Herstellung von mit Titandioxid pigmentierten Polyamiden mit verbesserten Eigenschaften auf technisch einfache und wirtschaftliche Weise ermöglicht.

Demgemäß wurde ein Verfahren zur Herstellung eines Titandioxid-Pigmente enthaltenden Polyamids, dadurch gekennzeichnet, dass man
Titandioxid-Pigmente in einer Ausgangsmischung enthaltend Wasser und Caprolactam mittels einer Vorrichtung dispergiert,
wobei die Vorrichtung
eine Dispergierkammer,
einen in dieser Dispergierkammer angeordneten scheibenförmigen Rotor,
einen in Verbindung mit dem Rotor in der Dispergierzone der Dispergierkammer angeordneten, mit radialen Öffnungen versehenen Stator,
auf jeder Seite des Rotors einen Stoffeinlaß, vorzugsweise mit jeweils einem axialen Kanalabschnitt derart, dass die Zusammenführung der beiden Stoffströme im äußeren Randbereich der Rotorscheibe angeordnet ist, und
einen Produktauslaß am äußeren Rand der Dispergierzone der Dispergierkammer,
aufweist,
indem man die Titandioxid-Pigmente durch einen der genannten Stoffeinlasse und die Ausgangsmischung, enthaltend Wasser und Caprolactam durch den anderen der genannten Stoffeinlasse der Dispergierkammer zuführt und eine Produktmischung, enthaltend Wasser, Caprolactam und das eingesetzte Titandioxid-Pigment, über den Produktauslaß erhält,
und
die Produktmischung zu einem Titandioxid-Pigmente enthaltenden Polyamid polymerisiert
gefunden.

Weiterhin wurden nach diesem Verfahren erhältliche Polyamide und die Verwendung solcher Polyamide als Masterbatch zur Mattierung oder Einfärbung eines Polymers gefunden.

Das erfindungsgemäße Verfahren betrifft die Herstellung eines Polyamids.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX ^{®} Faser, US-A-3,287,324) oder Poly-paraphenylen-terephthalamid (KEVLAR ^{®} Faser, US-A-3,671,542).

Die Herstellung von Polyamiden kann prinzipiell nach zwei Verfahren erfolgen.

Bei der Polymerisation aus Dicarbonsäuren und Diaminen, wie auch bei der Polymerisation aus Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation aus Carbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Diese Polymerisationsreaktion bezeichnet man üblicherweise als Polykondensation.

Die Polymerisation aus Lactamen als Ausgangsmonomeren oder Ausgangsoligomeren bezeichnet man üblicherweise als Polyaddition.

Solche Polyamide können nach an sich bekannten Verfahren, wie sie beispielsweise in DE-A-14 95 198, DE-A-25 58 480, EP-A-129 196 oder in: Polymerization Processes, Interscience, New York, 1977, S. 424-467, insbesondere S. 444-446, beschrieben sind, erhalten werden aus Monomeren ausgewählt aus der Gruppe bestehend aus Lactamen, omega-Aminocarbonsäuren, omega-Aminocarbonsäurenitrilen, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere.

Als Monomere kommen
Monomere oder Oligomere eines C₂ - bis C₂₀ - vorzugsweise C₂ - bis C₁₈ - arylaliphatischen oder vorzugsweise aliphatischen Lactams , wie Enantholactam, Undecanolactam, Dodecanolactam oder Caprolactam,
Monomere oder Oligomere von C₂ - bis C₂₀ -, vorzugsweise C₃ - bis C₁₈ - Aminocarbonsäuren, wie 6-Aminocapronsäure, 11-Aminoundecansäure, sowie deren Dimere, Trimere, Tetramere, Pentamere oder Hexamere, sowie deren Salze, wie Alkalisalze, beispielsweise Lithium-, Natrium-, Kalium-Salze,
C₂ - bis C₂₀ -, vorzugsweise C₃ - bis C₁₈ - Aminocarbonsäurenitrilen, wie 6-Aminocapronitril, 11-Aminoundecansäurenitril,
Monomere oder Oligomere von C₂ - bis C₂₀ - Aminosäuramiden, wie 6-Aminocapronsäureamid, 11-Aminoundecansäureamid sowie deren Dimere, Trimere, Tetramere, Pentamere oder Hexamere,
Ester, vorzugsweise C₁-C₄-Alkylester, wie Methyl-, Ethyl-, n-Propyl-, i-Propyl-, n-Butyl-, i-Butyl-, s-Butyl-ester, von C₂ - bis C₂₀ -, vorzugsweise C₃ - bis C₁₈ - Aminocarbonsäuren, wie 6-Aminocapronsäureester, beispielsweise 6-Aminocapronsäuremethylester, 11-Aminoundecansäureester, beispielsweise 11-Aminoundecansäuremethylester,
Monomere oder Oligomere eines C₂ - bis C₂₀-, vorzugsweise C₂ - bis C₁₂ - Alkyldiamins, wie Tetramethylendiamin oder vorzugsweise Hexamethylendiamin,
mit einer C₂ - bis C₂₀ -, vorzugsweise C₂ - bis C₁₄ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines C₂ - bis C₂₀ -, vorzugsweise C₂ - bis C₁₂ - Alkyldiamins, wie Tetramethylendiamin oder vorzugsweise Hexamethylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines C₂ - bis C₂₀₋, vorzugsweise C₂ - bis C₁₂ - Alkyldiamins, wie Tetramethylendiamin oder vorzugsweise Hexamethylendiamin,
mit einer C₉ - bis C₂₀ -, vorzugsweise C₉ - bis C₁₈ - arylaliphatischen Dicarbonsäure oder deren Derivate, beispielsweise Chloride, wie O-, m- oder p-Phenylendiessigsäure,
sowie deren Dimere, Trimere, Tetramere, Pentamere oder Hexamere,
Monomere oder Oligomere eines C₆ - bis C₂₀ -, vorzugsweise C₆ - bis C₁₀ - aromatischen Diamins, wie m- oder p-Phenylendiamin,
mit einer C₂ - bis C₂₀ -, vorzugsweise C₂ - bis C₁₄ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines C₆ - bis C₂₀ - vorzugsweise C₆ - bis C₁₀ - aromatischen Diamins, wie m- oder p-Phenylendiamin,
mit einer C₈ - bis C₂₀ -, vorzugsweise C₈ - bis C₁₂ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines C₆ - bis C₂₀ - vorzugsweise C₆ - bis C₁₀ - aromatischen Diamins, wie m- oder p-Phenylendiamin,
mit einer C₉ - bis C₂₀ -, vorzugsweise C₉ - bis C₁₈ - arylaliphatischen Dicarbonsäure oder deren . Derivate, beispielsweise Chloride, wie o-, m- oder p-Phenylendiessigsäure,
sowie deren Dimere, Trimere, Tetramere, Pentamere oder Hexamere,
Monomere oder Oligomere eines C₇ - bis C₂₀ -, vorzugsweise C₈ - bis C₁₈ - arylaliphatischen Diamins, wie m- oder p-Xylylendiamin,
mit einer C₂ - bis C₂₀ -, vorzugsweise C₂ - bis C₁₄ - aliphatischen Dicarbonsäure oder deren Mono- oder Dinitrile, wie Sebacinsäure, Dodecandisäure, Adipinsäure, Sebacinsäuredinitril, Decansäuredinitril oder Adipodinitril,
sowie deren Dimere, Trimere, Tetramere, Pentamere oder Hexamere,
Monomere oder Oligomere eines C₇ - bis C₂₀ -, vorzugsweise C₈ - bis C₁₈ - arylaliphatischen Diamins, wie m- oder p-Xylylendiamin,
mit einer C₆ - bis C₂₀ -, vorzugsweise C₆ - bis C₁₀ - aromatischen Dicarbonsäure oder deren Derivate , beispielsweise Chloride, wie 2,6-Naphthalindicarbonsäure, vorzugsweise Isophthalsäure oder Terephthalsäure,
sowie deren Dimere, Trimere, Tetramere, Pentamere oder Hexamere,
Monomere oder Oligomere eines C₇ - bis C₂₀ -, vorzugsweise C₈ - bis C₁₈ - arylaliphatischen Diamins, wie m- oder p-Xylylendiamin,
mit einer C₉ - bis C₂₀ -, vorzugsweise C₉ - bis C₁₈ - arylaliphatischen Dicarbonsäure oder deren Derivate, beispielsweise Chloride, wie o-, m- oder p-Phenylendiessigsäure,
sowie deren Dimere, Trimere, Tetramere, Pentamere oder Hexamere,
sowie Homopolymer Copolymere, Mischungen und Pfropfungen solcher Ausgangsmonomere oder Ausgangsoligomere in Betracht.

In einer bevorzugten Ausführungsform setzt man als Lactam Caprolactam, als Diamin Tetramethylendiamin, Hexamethylendiamin oder deren Gemische und als Dicarbonsäure Adipinsäure, Sebacinsäure, Dodecandisäure, Terephthalsäure, Isophthalsäure oder deren Gemische ein. Besonders bevorzugt ist als Lactam Caprolactam, als Diamin Hexamethylendiamin und als Dicarbonsäure Adipinsäure oder Terephthalsäure oder deren Gemische.

Besonders bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 6,12, Nylon 7, Nylon 11, Nylon 12 oder den Aramiden Poly-metaphenylen-isophthalamid oder Poly-paraphenylen-terephthalamid, insbesondere zu Nylon 6 oder Nylon 66, führen.

In einer bevorzugten Ausführungsform kann man bei der Herstellung der Polyamide einen oder mehrere Kettenregler einsetzen. Als Kettenregler kommen vorteilhaft Verbindungen in Betracht, die eine oder mehrere, wie zwei, drei oder vier, im Falle von Systemen in Form von Fasern bevorzugt zwei, bei der Polyamidbildung reaktive Amino-Gruppen oder eine oder mehrere, wie zwei, drei oder vier, im Falle von Systemen in Form von Fasern bevorzugt zwei bei der Polyamidbildung reaktive Carboxyl-Gruppen aufweisen.

Im ersten Fall erhält man Polyamide, bei denen die zur Herstellung des Polyamids eingesetzten Monomeren eine höhere Zahl an zur Bildung der Polymerkette eingesetzten Amin-Gruppen oder deren Äquivalente als zur Bildung der Polymerkette eingesetzte Carbonsäure-Gruppen oder deren Äquivalente aufweisen.

Im zweiten Fall erhält man Polyamide, bei denen die zur Herstellung des Polyamids eingesetzten Monomeren eine höhere Zahl an zur Bildung der Polymerkette eingesetzten Carbonsäure-Gruppen oder deren Äquivalente als zur Bildung der Polymerkette eingesetzte Amin-Gruppen oder deren Äquivalente aufweisen.

Als Kettenregler können vorteilhaft Monocarbonsäuren, wie Alkancarbonsäuren, beispielsweise Essigsäure, Proprionsäure, wie Benzol- oder Naphthalinmonocarbonsäure, beispielsweise Benzoesäure, Dicarbonsäuren, wie C₄-C₁₀-Alkandicarbonsäure, beispielsweise Adipinsäure, Azelainsäure, Sebacinsäure, Dodecandisäure, C₅-C₈-Cycloalkandicarbonsäuren, beispielsweise Cyclohexan-1,4-dicarbonsäure, Benzol- oder Naphthalindicarbonsäure, beispielsweise Terephthalsäure, Isophthalsäure, Naphthalin-2,6-dicarbonsäure, C₂ - bis C₂₀ -, vorzugsweise C₂ - bis C₁₂ - Alkylamine, wie Cyclohexy4amin, C₆ - bis C₂₀ -, vorzugsweise C₆ -bis C₁₀ - aromatische Monoamine, wie Anilin, oder C₇ - bis C₂₀ -, vorzugsweise C₈ - bis C₁₈ - arylaliphatische Monoamine, wie Benzylamin, Diamine, wie C₄-C₁₀-Alkandiamine, beispielsweise Hexamethylendiamin eingesetzt werden.

Die Kettenregler können unsubstituiert oder substituiert sein, beispielsweise durch aliphatische Gruppen, vorzugsweise C₁-C₈-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, C₁-C₈-Alkoxy, COOH, C₂-C₆-Carbalkoxy, C₁-C₁₀-Acyloxy, oder C₁-C₈-Alkylamino, Sulfonsäure oder deren Salze, wie Alkali- oder Erdalkalisalze, Cyano, oder Halogene, wie Fluor, Chlor, Brom. Beispiele für substituierte Kettenregler sind Sulfoisophthalsäure, deren Alkali- oder Erdalkalisalze, wie Lithium-, Natrium oder Kalium-Salze, Sulfoisophthalsäureester, beispielsweise mit C₁-C₁₆-Alkanolen, oder Sufoisophthalsäuremono- oder diamide, insbesondere mit zur Bildung von Polyamiden geeigneten, mindestens eine Amingruppe tragenden Monomeren, wie Hexamethylendiamin oder 6-Aminocapronsäure.

Vorteilhaft kann man einen Kettenregler in Mengen von mindestens 0,01 Mol%, vorzugsweise mindestens 0,05 Mol-%, insbesondere mindestens 0,2 Mol-%, bezogen auf 1 Mol Säureamidgruppen des Polyamids, einsetzen.

Vorteilhaft kann man einen Kettenregler in Mengen von höchstens 1,0 Mol-%, vorzugsweise höchstens 0,6 Mol%, insbesondere höchstens 0,5 Mol%, bezogen auf 1 Mol Säureamidgruppen des Polyamids, einsetzen.

Vorteilhaft kann das Polyamid ein an die Polymerkette chemisch gebundenes sterisch gehindertes Piperidin-Derivat enthalten. Das Polyamid kann dabei als sterisch gehindertes Piperidin-Derivat auch Gemische solcher sterisch gehinderter Piperidin-Derivat enthalten.

Bevorzugt kommen als sterisch gehindertes Piperidin-Derivate solche der Formel 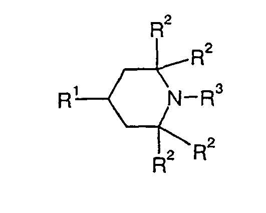 wobei
- R¹: für eine funktionelle Gruppe steht, die zur Amidbildung gegenüber der Polymerkette des Polyamids fähig ist,
vorzugsweise eine Gruppe -(NH)R⁵, wobei R⁵ für Wasserstoff oder C₁-C₈-Alkyl steht, oder eine Carboxylgruppe oder ein Carboxylderivat oder eine Gruppe -(CH₂)ₓ(NH)R⁵, wobei X für 1 bis 6 steht und R5 für Wasserstoff oder C₁-C₈-Alkyl steht, oder eine Gruppe - (CH₂)yCOOH, wobei Y für 1 bis 6 steht, oder ein -(CH₂)_{y}COOH Säurederivat, wobei Y für 1 bis 6 steht,
insbesondere für eine Gruppe -NH₂ steht,
- R²: für eine Alkylgruppe steht, vorzugsweise eine C₁-C₄-Alkylgruppe, wie Methyl, Ethyl, n-Propyl, i-Propyl, n-Butyl, i-Butyl, s-Butyl, t-Butyl,
insbesondere eine Methylgruppe,
- R³: für Wasserstoff, C₁-C₄-Alkyl oder O-R⁴ steht, wobei R⁴ für Wasserstoff oder C₁-C₇ Alkyl steht,
insbesondere R³ für Wasserstoff steht,
in Betracht.

In solchen Verbindungen reagieren üblicherweise die tertiären, insbesondere sekundären Aminogruppen der Piperidin-Ringsysteme dabei wegen sterischer Hinderung nicht.

Besonders bevorzugt als sterisch gehindertes Piperidin-Derivat ist 4-Amino-2,2,6,6-Tetramethylpiperidin.

Vorteilhaft kann man das sterisch gehinderte Piperidin-Derivat in Mengen von mindestens 0,01 Mol%, vorzugsweise mindestens 0,05 Mol%, insbesondere mindestens 0,1 Mol-%, bezogen auf 1 Mol Säureamidgruppen des Polyamids, einsetzen.

Vorteilhaft kann man das sterisch gehinderte Piperidin-Derivat in Mengen von höchstens 0,8 Mol%, vorzugsweise höchstens 0,6 Mol%, insbesondere höchstens 0,4 Mol-%, bezogen auf 1 Mol Säureamidgruppen des Polyamids, einsetzen.

Solche Polyamide, die ein an die Polymerkette chemisch gebundenes sterisch gehindertes Piperidin-Derivat enthalten, sowie Verfahren zur Herstellung solcher Polyamide sind beispielsweise in WO 95/28443, WO 97/05189, WO 98150610, WO 99/46323, WO 99/48949, EP-A-822 275, EP-A-843 696 und den deutschen Anmeldungen 10030515.6, 10030512.1 und 10058291.5 beschrieben.

Das erfindungsgemäße Verfahren betrifft die Herstellung von mit Titandioxid pigmentiertem Polyamid.

Das Titandioxid kann in allen möglichen Modifikationen, wie Anatas, Rutil oder Brookit, oder deren Gemische eingesetzt werden. Bevorzugt sind Anatas oder Rutil oder deren Gemische, insbesondere Anatas, wobei synthetischer Anatas üblicherweise herstellungsbedingt geringe Mengen an Rutil, beispielsweise bis zu 5 Gew.% bezgen auf Gesamtgewicht, enthalten kann.

Die spezifische BET-Oberfläche des Titandioxids ist an sich nicht kritisch, wobei mit zunehmender BET-Oberfläche im allgemeinen die Reaktivität des Titandioxids, wie die sogenannte Kreidungswirkung, zunimmt, und andererseits mit abnehmender BET-Oberfläche im allgemeinen die durchschnittliche mittlere Partikelgröße zunimmt.

Für die Verwendung des Titandioxids als Mattierungs- oder Einfärbemittel ist einerseits eine geringe Kreidungswirkung, andererseits eine geringe Partikelgröße erwünscht.

Die für das jeweilige Polyamid und den jeweiligen Verwendungszweck optimale BET-Oberfläche kann durch wenige einfache Vorversuche leicht ermittelt werden.

Zur Verminderung der Kreidungswirkung des Titandioxids, also zur Herabsetzung der photochemischen Aktivität hinsichtlich einer Zersetzung der umgebenden Polyamid-Matrix, kann das Titandioxid mit Verbindungen anderer Elemente, beispielsweise der Oxide, vorteilhaft von Mangan, Eisen, Antimon, Silizium oder Aluminium beschichtet sein.

Derartige Titandioxid-Pigmente sowie deren Herstellung sind allgemein bekannt und geeignete Titandioxid-Pigmente kommerziell erhältlich.

Erfindungsgemäß dispergiert man Titandioxid-Pigmente in einer Ausgangsmischung enthaltend Wasser und Caprolactam.

Vorteilhaft sollte in der Ausgangsmischung, enthaltend Wasser und Caprolactam, das Mengenverhältnis zwischen Wasser und Caprolactam im Bereich von 50/50 bis 99/1, vorzugsweise von 80/20 bis 97/3, insbesondere von 93l7 bis 95/5 Masse/Masse liegen.

Die Ausgangsmischung kann vorteilhaft ein Dispergierhilfsmittel enthalten.

Als Dispergierhilfsmittel kommen Schutzkolloide und/oder Emulgatoren, wie sie beispielsweise in Houben-Weyl, Methoden der Organischen Chemie, Bd. XIV/1, Makromolekulare Stoffe, Georg-Thieme-Verlag, Stuttgart, 1961, S. 411 - 420 bzw. S. 192 - 208 beschrieben werden, besonders bevorzugt Na₂HPO₄ (z.B. Dinatriumhydrogenphosphat- 12 Hydrat; Chem. Werke Budenheim) sowie Na-Salze modifizierter Polyacrylsäuren mit einem durchschnittlichen Molekulargewicht von etwa 4000 (z.B. Sokalan PA 20 PN; BASF) oder deren Gemische in Betracht.

Das Dispergierhilfsmittel kann vorzugsweise in Mengen von 0,01 bis 5,0, insbesondere von 0,1 bis 1,0 Gew.%, bezogen auf Ausgangsmischung, eingesetzt werden.

Die Ausgangsmischung kann in einer bevorzugten Ausführungsform neben Caprolactam weitere der oben genannten, zur Bildung von Polyamiden geeignete Monomere, Kettenregler oder Piperidinderivate, oder deren Gemische enthalten.

In einer weiteren bevorzugten Ausführungsform enthält die Ausgangsmischung Caprolactam als einziges zur Bildung von Polyamid geeignetes Monomer. In einer besonders bevorzugten Ausführungsform enthält die Ausgangsmischung keines der genannten Piperdinderivate. In einer besonders bevorzugten Ausführungsform enthält die Ausgangsmischung keinen der genannten Kettenregler.

In dem erfindungsgemäßen Verfahren kann man Titandioxid-Pigment und die Ausgangsmischung in einem Mengenverhältnis im Bereich von 1 / 99 bis 50 / 50, vorzugsweise von 10 / 90 bis 40 60, insbesondere von 15 / 85 bis 25 / 75 Masse/Masse einsetzen.

Erfindungsgemäß dispergiert man Titandioxid-Pigmente in der Ausgangsmischung mittels einer Vorrichtung, die
eine Dispergierkammer,
einen in dieser Dispergierkammer angeordneten scheibenförmigen Rotor,
einen in Verbindung mit dem Rotor in der Dispergierzone der Dispergierkammer angeordneten, mit radialen Öffnungen versehenen Stator,
auf jeder Seite des Rotors einen Stoffeinlaß, vorzugsweise mit jeweils einem axialen Kanalabschnitt derart, dass die Zusammenführung der beiden Stoffströme im äußeren Randbereich der Rotorscheibe angeordnet ist, und
einen Produktauslaß am äußeren Rand der Dispergierzone der Dispergierkammer,
aufweist.

Solche Vorrichtungen sind an sich bekannt. Bevorzugte Ausführungsformen geeigneter Vorrichtungen sind in WO 92/21436 und insbesondere bevorzugte Ausführungsformen geeigneter Vorrichtungen in WO 01/87474 beschrieben. Der Inhalt beider Schriften wird hiermit durch Zitierung in die vorliegende Beschreibung übernommen ("incorporation-by-reference").

Geeignete Vorrichtungen sind kommerziell erhältlich, beispielsweise die Maschinen der Typen TDS oder vorzugsweise Conti-TDS der Firma Ystral GmbH Maschinenbau + Processtechnik, Deutschland.

Erfindungsgemäß erhält man eine Produktmischung, indem man die Titandioxid-Pigmente durch einen der genannten Stoffeinlasse und die Ausgangsmischung, enthaltend Wasser und Caprolactam durch den anderen der genannten Stoffeinlasse der Dispergierkammer zuführt und eine Produktmischung, enthaltend Wasser, Caprolactam und das eingesetzte Titandioxid-Pigment, über den Produktauslaß erhält.

Die für den jeweiligen Maschinentyp und jeweils gewünschte Produktzusammensetzung optimalen Betriebsparameter können dabei durch wenige einfache Vorversuche leicht ermittelt werden.

Erfindungsgemäß polymerisiert man die Produktmischung zu einem Titandioxid-Pigmente enthaltenden Polyamid.

Die Polymerisation kann vorteilhaft nach einem der oben für die Herstellung von Polyamiden - genannten Verfahren erfolgen.

In einer vorteilhaften Ausführungsform kann man die Produktmischung vor der Polymerisation lagern, beispielsweise in einem Absetzkessel, wobei vorteilhaft Zeiten im Bereich von 1 bis 100 Stunden, insbesondere von 10 bis 50 Stunden in Betracht kommen, um in der Produktmischung gegebenenfalls enthaltene gröbere Titandioxid-Pigmente sedimentieren zu lassen.

Nach dem Sedimentieren kann man die für die Polymerisation bestimmte Mischung von der Oberfläche abnehmen, wie Abpumpen. Der Bodensatz kann vorteilhaft in die Dispergierung zurückgeführt werden.

In einer weiteren bevorzugten Ausführungsform kann vor der Polymerisation der Wasser-Gehalt der Produktmischung, insbesondere nach dem Sedimentieren der gröberen Titandioxid-Pigmente, reduziert werden nach an sich bekannten Verfahren, wie durch Verdampfen. Weiterhin in einer bevorzugten Ausführungsform der Monomeren-Gehalt der Poduktmischung vor der Polymerisation erhöht werden, indem weiteres Monomer, wie Caprolactam, zugesetzt wird.
Die Entfernung von Wasser und die Zugabe von weiterem Monomer kann kombiniert angewandt werden, wobei die Abtrennung von Wasser vor, nach oder während, vorzugsweise vor, der Monomer-Zugabe erfolgen kann.

In einer bevorzugten Ausführungsform kann man die Gehalte an Titandioxid, Polyamidbildenden Komponenten und Wasser so einstellen, dass man als Produkt ein mit Titandioxid pigmentiertes Polyamid erhält, in dem der Titandioxid-Gehalt, bezogen auf Gesamtgewicht, im Bereich von 1 bis 50, vorzugsweise von 5 bis 45, insbesondere von 8 bis 40 Gew.-% beträgt.

Die nach dem erfindungsgemäßen Verfahren erhältlichen Polyamide können vorteilhaft als Masterbatch zur Mattierung oder Einfärbung eines Polymers verwendet werden. Hierbei kommt insbesondere die Zugabe des Masterbatches in geschmolzener Form zu einem polymerbildende Monomere, wie Caprolactam im Fall von Polyamid 6, enthaltenden Hauptstrom während der Polymerisation in Betracht. Ebenso bevorzugt kommt die Zugabe des Masterbatches zu einem von dem Masterbatch abweichenden Polymer in Betracht, beispielsweise durch Coextrusion oder Einmischen als Schmelze.

Grundsätzlich können zur Einarbeitung der erfindungsgemäßen, mit Titandioxid pigmentierten Polyamide in Polymere die für die Einarbeitung von mit Titandioxid pigmentierten Polyamiden in Polymere an sich bekannten Verfahren angewandt werden.

Das erfindungsgemäße Verfahren weist den Vorteil auf, dass die im Polyamid enthaltenen Titandioxid-Pigmente eine mittlere durchschnittliche Partikelgröße, gemessen mittels Lichtmikroskopie an Dünnschnitten < 1,2 µm und damit kleiner als die Partikelgröße in nach dem Stand der Technik hergestellten Polyamiden ist.

Weitere Vorteile des erfindungsgemäßen Verfahrens können den Beispielen entnommen werden.

### Beispiele

### Herstellung der Masterbatche

### Beispiel 1

Mittels einer Wasserringpumpe (Conti-TDS, Firma Ystral GmbH Maschinenbau und Processtechnik, Deutschland), wurden aus 1000 kg/h Titandioxid (Hombitan LOCR-SM, Firma Sachtleben Chemie GmbH, Duisburg), und 4100 kg/h einer Mischung enthaltend 93,8 Gew.-% Wasser, 6,0 Gew.-% Caprolactam und 0,2 Gew.-% Dispergiermittel (Sokalan PA 20 PN, Firma BASF AG), innerhalb von 2 h eine Suspension hergestellt und in einen. Rührbehälter überführt und dort mittels einer Ringleitung im Kreis umgepumpt.

Anschließend wurde die Suspension in einen Absetzbehälter überführt.und die gröberen Titandioxid-Partikel innerhalb von 48 Stunden absetzen gelassen.

Aus dem Absetzbehälter wurden dann von der Oberfläche 3,5 m³ Suspension in einen Vorratsbehälter gepumpt. Daraus werden 5 m³ innerhalb von 5 h zu 2300 1 flüssigem Caprolactam bei einer Temperatur von 125°C und einem Druck von 0,5 bar gegeben, wobei mit der Suspension zugeführtes Wasser verdampfte. Hierdurch stieg die Temperatur der Schmelze bis auf 152°C an.

Danach wurde die Suspension in einen zweiten, mit Diphyl beheizten Kessel überführt und unter weiterer Verdampfung von Wasser bei konstant 6 bar Kesseldruck bis auf 257°C aufgeheizt. Dann wurde der Druck innerhalb von 35 min. von 6 bar auf 0,03 bar abgesenkt.

Nach Stickstoffaufgabe wurde die Schmelze einer Unterwassergranulierung zugeführt und das Granulat getrocknet.

### Beispiel 2

Es wurde wie in Beispiel 1 verfahren mit der Abweichung, dass anstelle von 5 m³ Titandioxidhaltiger Suspension nur 2 m³ und anstelle von 2300 1 Caprolactam 3200 1 Caprolactam eingesetzt wurden.

### Vergleichsbeispiel

Es wurde ein Titandioxid-haltiges Polyamid gemäß EP-A-070 452, Beispiel hergestellt.

Verarbeitung der Masterbatche

### a) Filtration

Die in Beispiel 1, Beispiel 2 und dem Vergleichsbeispiel erhaltenen Titandioxid-haltigen Polyamide wurden gemäß EP-A-070452 so mit Caprolactam abgemischt und polymerisiert, dass ein Polyamid mit einem Titandioxid-Gehalt von 1,6 Gew.-%, bezogen auf das Gesamtgewicht, erhalten wurde. Die durch mit Masterbatch gemäß Beispiel 1 bzw. 2 erhaltenen Polyamide werden im folgenden als Polyamid 1 bzw. 2 bezeichnet, das mit dem Masterbatch gemäß Vergleichsbeispiel erhaltene Polyamid als Vergleichspolyamid.

Die Mischungen wurden in der Schmelze bei einer Temperatur von 262°C bei einem Durchsatz von 3,7 g/min durch ein Filtervlies mit einer durchschnittlichen mittleren Porenweite von 10 µm über 12 Stunden jeweils sechsmal filtriert.

Der durchschnittliche mittlere Druckaufbau, bestimmt als Differenz zwischen Enddruck und Anfangsdruck vor dem Filter dividiert durch die durchgesetzte Menge, betrug im Falle von Polyamid 1 bzw. 2 jeweils ca. 7 bar/kg, während der Druckaufbau im Falle des Vergleichspolyamids 10 bar/kg betrug.

### b) Abrasion

Aus Polyamid 1 bzw. 2 und Vergleichspolyamid wurde jeweils ein Garn mit dem Titer 44f12 dtex hergestellt.

50 km des Garns wurden je zweimal über ein Kupferblech (Krümmung: 90°, Zugkraft: 2cN; Geschwindigkeit: 150 m/min) gezogen.

Das Garn aus Polyamid 1 bzw. 2 wies eine durchschnittliche Abrasion von 3,8 mg / 100 km Garn auf, das Garn aus dem Vergleichspolyamid eine Abrasion von 4,2 mg / 100 km.

## Patentansprüche

1. Verfahren zur Herstellung eines Titandioxid-Pigmente enthaltenden Polyamids, **dadurch gekennzeichnet, dass** man
Titandioxid-Pigmente in einer Ausgangsmischung enthaltend Wasser und Caprolactam mittels einer Vorrichtung dispergiert,
wobei die Vorrichtung
eine Dispergierkammer,
einen in dieser Dispergierkammer angeordneten scheibenförmigen Rotor,
einen in Verbindung mit dem Rotor in der Dispergierzone der Dispergierkammer angeordneten, mit radialen Öffnungen versehenen Stator,
auf jeder Seite des Rotors einen Stoffeinlass, vorzugsweise mit jeweils einem axialen Kanalabschnitt derart, dass die Zusammenführung der beiden Stoffströme im äußeren Randbereich der Rotorscheibe angeordnet ist, und
einen Produktauslass am äußeren Rand der Dispergierzone der Dispergierkammer,
aufweist,
indem man die Titandioxid-Pigmente durch einen der genannten Stoffeinlasse und die Ausgangsmischung, enthaltend Wasser und Caprolactam durch den anderen der genannten Stoffeinlasse der Dispergierkammer zuführt und eine Produktmischung, enthaltend Wasser, Caprolactam und das eingesetzte Titandioxid-Pigment, über den Produktauslass erhält,
und
die Produktmischung zu einem Titandioxid-Pigmente enthaltenden Polyamid polymerisiert.

2. Verfahren nach Anspruch 1, wobei die Ausgangsmischung zusätzlich ein Dispergierhilfsmittel enthält.

3. Verfahren nach Anspruch 1 oder 2, wobei man aus der Produktmischung vor oder während der Polymerisation Wasser entfernt.

4. Verfahren nach den Ansprüchen 1 bis 3, wobei man der Produktmischung vor oder während der Polymerisation Caprolactam zusetzt.

5. Titandioxid-Pigmente enthaltendes Polyamid, erhältlich nach einem Verfahren gemäß den Ansprüchen 1 bis 4.

6. Verwendung von nach einem Verfahren gemäß den Ansprüchen 1 bis 4 erhältlichen, Titandioxid-Pigmente enthaltenden Polyamids als Masterbatch zur Mattierung oder Einfärbung eines Polymers.

## Claims

1. A process for producing a polyamide which comprises titanium dioxide pigments, which process comprises
dispersing titanium dioxide pigments in a starting mixture comprising water and caprolactam by means of an apparatus,
said apparatus comprising
a dispersing chamber,
a disk-shaped rotor disposed in said dispersing chamber,
a stator which has radial openings and is disposed in conjunction with said rotor in the dispersing zone of said dispersing chamber,
a product inlet on each side of said rotor, each product inlet preferably having an axial channel section such that the confluence of the two product streams is disposed in the outer peripheral region of the rotor disk, and
a product outlet at the outer periphery of said dispersing zone of said dispersing chamber,
by feeding the titanium dioxide pigments through one of said product inlets and the starting mixture, comprising water and caprolactam, through the other one of said product inlets, to said dispersing chamber, and obtaining a product mixture, comprising water, caprolactam and the titanium dioxide pigment used, via said product outlet,
and
polymerizing said product mixture to a polyamide comprising titanium dioxide pigments.

2. The process according to claim 1, wherein the starting mixture further comprises a dispersing assistant.

3. The process according to claim 1 or 2, wherein water is removed from the product mixture before or during the polymerization.

4. The process according to any of claims 1 to 3, wherein caprolactam is added to the product mixture before or during the polymerization.

5. A polyamide comprising titanium dioxide pigments which is obtainable by a process according to any of claims 1 to 4.

6. The use of a polyamide comprising titanium dioxide pigments which is obtainable by a process according to any of claims 1 to 4 as a masterbatch for delustering or coloration of a polymer.

## Revendications

1. Procédé pour la production d'un polyamide contenant des pigments dioxyde de titane,
**caractérisé en ce que**
on disperse au moyen d'un dispositif des pigments dioxyde de titane dans un mélange de départ contenant de l'eau et du caprolactame,
le dispositif comportant
une chambre de dispersion,
un rotor en forme de disque placé dans cette chambre de dispersion,
un stator muni d'ouvertures radiales, placé en relation avec le rotor dans la zone de dispersion de la chambre de dispersion,
une entrée de matière de chaque côté du rotor, de préférence avec chacune un segment de canal axial, de sorte que l'introduction conjointe des deux flux de matières est placée dans la zone du bord extérieur du disque du rotor, et
une sortie de produit au niveau du bord extérieur de la zone de dispersion de la chambre de dispersion,
par introduction des pigments dioxyde de titane par l'une des entrées de matière nommées et du mélange de départ, contenant de l'eau et du caprolactame, par l'autre des entrées de matière nommées de la chambre de dispersion, et obtention par la sortie de produit d'un mélange consistant en le produit, contenant de l'eau, du caprolactame et le pigment dioxyde de titane utilisé,
et
polymérisation du mélange consistant en le produit, en un polyamide contenant des pigments dioxyde de titane.

2. Procédé selon la revendication 1, dans lequel le mélange de départ contient en outre un dispersant.

3. Procédé selon la revendication 1 ou 2, dans lequel avant ou pendant la polymérisation on élimine l'eau du mélange consistant en le produit.

4. Procédé selon les revendications 1 à 3, dans lequel on ajoute du caprolactame, avant ou pendant la polymérisation, au mélange consistant en le produit.

5. Polyamide contenant des pigments dioxyde de titane, pouvant être obtenu conformément à un procédé selon les revendications 1 à 4.

6. Utilisation de polyamide contenant des pigments dioxyde de titane, pouvant être obtenu conformément à un procédé selon les revendications 1 à 4, en tant que mélange-maître pour le matage ou la coloration d'un polymère.
